# EUROPÄISCHE PATENTSCHRIFT

(11) **EP 3 686 803 B1**
(45) Veröffentlichungstag und Bekanntmachung des Hinweises auf die Patenterteilung: **21.06.2023**
(21) Anmeldenummer: 20151951.9
(22) Anmeldetag: 15.01.2020
(51) Int. Cl.: G06K 15/10, H04N 1/405, H04N 1/407

(54) **VERFAHREN ZUM ERZEUGEN EINES DRUCKPRODUKTES MIT MINDESTENS EINEM NON-IMPACT-DRUCKAGGREGAT UND DRUCKPRODUKT**
METHOD FOR PRODUCING A PRINTED PRODUCT WITH AT LEAST ONE NON-IMPACT PRINTING UNIT AND PRINTED PRODUCT
PROCÉDÉ DE FABRICATION D'UN PRODUIT IMPRIMÉ À L'AIDE D'AU MOINS UN DISPOSITIF D'IMPRESSION SANS IMPACT ET PRODUIT IMPRIMÉ

(30) Priorität: 23.01.2019 DE 102019101578
(43) Veröffentlichungstag der Anmeldung: 29.07.2020
(73) Patentinhaber: Koenig & Bauer AG, 97080 Würzburg (DE)
(72) Erfinder: Breunig, Hartmut, 97450 Arnstein (DE); Ebersbach, Steffen, 97082 Würzburg (DE)
(74) Vertreter: Koenig & Bauer AG

(56) Entgegenhaltungen:
- EP-A1- 2 905 376
- JP-A- H06 143 615
- US-A- 5 706 414
- Anonymous: "Imaging Engine 14.1 User Guide", , 1. August 2015 (2015-08-01), XP055403766, Gefunden im Internet: URL:https://docs.esko.com/docs/en-us/autom ationengine/14.1/userguide/pdf/ImagingEngi ne_141.pdf [gefunden am 2017-09-05]

## Beschreibung

Die Erfindung betrifft ein Verfahren zum Erzeugen eines Druckproduktes mit mindestens einem Non-Impact-Druckaggregat und ein Druckprodukt gemäß dem Oberbegriff des Anspruches 1 und des Anspruches 7.

Zum Bedrucken eines Bedruckstoffes durch eine Druckmaschine stehen unterschiedliche Verfahren zur Verfügung, beispielsweise Hochdruck, Tiefdruck oder Non-Impact-Druckverfahren. Non-Impact-Druckverfahren, beispielsweise thermografische Verfahren oder insbesondere das Inkjet-Verfahren, besitzen keine feste, körperlich unveränderliche Druckform und können beispielsweise in jedem Druckvorgang unterschiedliche Druckbilder auf einem Bedruckstoff erzeugen. Eine Non-Impact-Druckmaschine weist zumindest ein Druckaggregat mit vorzugsweise zumindest einem Druckkopf, beispielsweise bevorzugt einem Inkjet-Druckkopf, mit mindestens einer Düse auf. Beim Inkjet-Druckverfahren werden je nach Bedarf einzelne Tropfen eines Druckfluides aus der mindestens einen Düse ausgestoßen und auf einen Bedruckstoff übertragen, sodass sich auf dem Bedruckstoff ein Druckbild ergibt. Durch einzelne Ansteuerung einer Vielzahl von Düsen werden beispielsweise unterschiedliche Druckbilder erzeugt, welche beispielsweise individualisiert und/oder personalisiert sind und/oder beispielsweise insbesondere in kleinen Auflagen kostengünstig produziert werden.

Die US 2015/ 0 218 395 A1 zeigt ein Verfahren, um ein digitales Bild auf ein Substrat zu drucken, wobei das digitale Bild durch wasserbasierte Tintentropfen eines Piezo-Druckkopfes auf dem Substrat erzeugt wird.

Durch die EP 1 475 233 B1 ist ein Verfahren bekannt, wobei in einer digitalen Bildvorlage zum Drucken mit einem Non-Impact-Druckaggregat jeder Rasterpunkt in Abhängigkeit von einem Korrekturfaktor modifiziert wird.

Die EP 2 905 145 A1 offenbart ein Verfahren zur Herstellung von Paneelen mit einer dekorativen Oberfläche, wobei eine oberste Schicht eine Papierschicht aufweist, wobei ein in Wärme aushärtendes Harz auf die Papierschicht aufgebracht wird, wobei ein Druckbild durch einen digitalen Inkjet Drucker auf die Papierschicht aufgebracht wird, wobei das Druckbild ein Holz entsprechendes Motiv aufweist.

Durch die EP 2 905 376 A1 ist ein Verfahren zur Herstellung von dekorativen Laminaten offenbart, wobei ein Substrat aus Papier mit einem in Wärme aushärtenden Harz imprägniert wird, wobei eine Farbannahmeschicht auf das imprägnierte Substrat aufgebracht wird, wobei ein Druckbild durch Pigmente enthaltende Farbe auf das Substrat aufgebracht wird, wobei das Laminat durch Heißpressen erzeugt wird.

Die US 5 706 414 A offenbart ein Verfahren zur Entfernung von Pixeln in einer Bildebene mit hoher Druckdichte ohne die Druckqualität signifikant zu verschlechtern. Dabei wird eine Tabelle erzeugt, nach welcher einzelne Pixel aus der Bildebene entfernt werden, welche Pixel als passende Kandidaten für eine Entfernung ausgewählt wurden.

Die JP H06 143615 A offenbart ein Inkjet-Druckaggregat, wobei unter Einbeziehung einer Temperaturmessung des Druckkopfes einzelne Druckpunkte aus der Druckvorlage entfernt werden. Dabei werden Eingangsdaten durch ein Programm überführt zu einem zu druckenden Datensatz, welcher eine reduzierte Anzahl an Druckpunkten aufweist. Die nicht-gedruckten bzw. entfernten Druckpunkte sind dabei willkürlich angeordnet.

Der Erfindung liegt die Aufgabe zugrunde, ein Verfahren zum Erzeugen eines Druckproduktes mit mindestens einem Non-Impact-Druckaggregat mit einer veränderten digitalen Bildvorlage und ein entsprechendes Druckprodukt zu schaffen.

Die Aufgabe wird erfindungsgemäß durch die Merkmale des Anspruches 1 und des Anspruches 7 gelöst. Die abhängigen Ansprüche zeigen vorteilhafte Weiterbildungen und/oder Ausführungen der gefundenen Lösungen.

Die mit der Erfindung erzielbaren Vorteile bestehen insbesondere darin, dass die Trocknung einer Endfläche durch integrierte Farbaussparungen unterstützt wird. Zudem wird beispielsweise bei einem Druckprodukt, welches mit einer veränderten digitalen Bildvorlage gedruckt ist, die Haftung einer nachträglich aufgebrachten Beschichtung und/oder Folie auf dem Druckbild, beispielsweise eines nachträglich aufgebrachten Lackes und/oder Harzes, auf dem bedruckten Bedruckstoff vorteilhaft verstärkt. Dies gewährleistet beispielsweise eine vereinfachte Weiterverarbeitung des Druckproduktes.

Das Druckbild eines in einem Tiefdruckverfahren hergestellten Objektes weist stochastisch verteilte Bereiche reduzierter Farbschichtdicken auf. Diese sind auf die Oberflächenbeschaffenheit der Druckform zurückzuführen, welche Näpfchen mit festen Stegen aufweist. Während des Druckvorgangs haftet beispielsweise das Druckfluid zumindest teilweise an den Stegen an und wird an diesen Positionen lediglich in geringerem Volumen oder nicht auf den Bedruckstoff übertragen. Diese Bereiche reduzierter Farbschichtdicke werden auf vorteilhafte Weise durch das Integrieren von Farbaussparungen in eine Endfläche im Digitaldruck nachempfunden.

Ausführungsbeispiele der Erfindung sind in den Zeichnungen dargestellt und werden im Folgenden näher beschrieben.

Es zeigen:

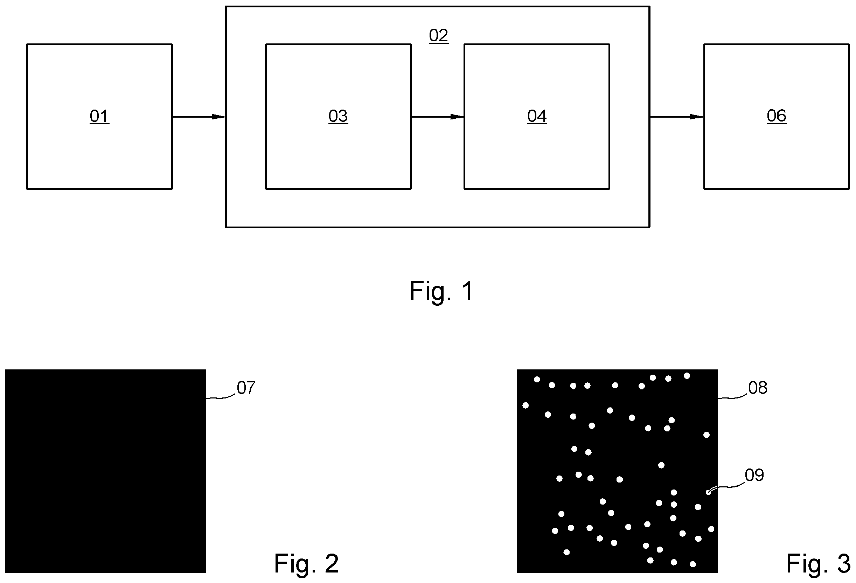

- Fig. 1: einen schematischen Ablauf der Umwandlung eines zu druckenden Objektes hin zu einem Druckbild;
- Fig. 2: einen schematischen Ausschnitt einer Ausgangsvollfläche;
- Fig. 3: einen schematischen Ausschnitt einer Endfläche umfassend eine Vielzahl von Farbaussparungen;
- Fig. 4: ein Beispiel eines Tiefdruck-Druckbild hergestellt in einem Tiefdruckverfahren;
- Fig. 5: ein Beispiel eines Druckbildes hergestellt in einem Non-Impact-Druckverfahren mit einer Endfläche und Farbaussparungen zum Nachbilden eines Druckbildes aus einem Tiefdruckverfahren.

Eine Druckmaschine ist innerhalb dieser Beschreibung eine Maschine, die zumindest ein Druckfluid auf einen Bedruckstoff aufträgt und/oder aufzutragen fähig ist. Die Druckmaschine umfasst mindestens eine Bedruckstoffquelle, zumindest ein Druckaggregat und bevorzugt zumindest eine Trocknungseinrichtung. Das zumindest eine Druckaggregat ist als zumindest ein Non-Impact-Druckaggregat, insbesondere als Tintenstrahldruckaggregat, bevorzugt ein Inkjet-Druckaggregat, ausgebildet.

Ein Bedruckstoff ist im Vorangegangenen und im Folgenden ein Substrat, welches durch die mindestens eine Druckmaschine und/oder zumindest ein Druckaggregat der Druckmaschine mit einem Druckfluid bedruckbar ist. Beispielsweise ist der Bedruckstoff als Papier, Pappe, Textil und/oder Folie, beispielsweise eine Kunststofffolie oder eine Metallfolie, oder auch als Laminat ausgebildet. Der Bedruckstoff ist insbesondere als Bahn oder Bogen ausgebildet.

Der für den Transport eines Bedruckstoffes vorgesehene Raumbereich, den der Bedruckstoff im Fall seiner Anwesenheit zumindest zeitweise einnimmt, definiert einen Transportweg. Der Transportweg wird durch Transportmittel, insbesondere durch zumindest eine Führung, bevorzugt zumindest eine Walze und/oder zumindest eine Auflage und/oder zumindest eine sonstige Einrichtung zum Führen des Bedruckstoffes in einem Betriebszustand der Druckmaschine, festgelegt. Die Transportrichtung ist eine für den Betrieb vorgesehene Richtung, in welche der Bedruckstoff im Fall seiner Anwesenheit an jedem Punkt des Transportweges transportiert wird. Im Fall eines gekrümmten Transportweges ist die Transportrichtung bevorzugt jeweils diejenige Richtung, die tangential zu einem nächsten Teilstück zu einem jeweiligen Bezugspunkt und/oder Punkt des vorgesehenen Transportweges verläuft. Dieser jeweilige Bezugspunkt liegt bevorzugt an dem Punkt und/oder an dem Bauteil, das zu der Transportrichtung in Bezug gesetzt wird. Eine Querrichtung ist die laterale Richtung orthogonal zu der Transportrichtung und entspricht bevorzugt der Längsseite des Druckaggregats.

Ein Druckfluid oder auch Farbe bezeichnet im Vorangegangenen und im Folgenden Tinten, Druckfarben und/oder Lacke, sowie weitere Materialien, die durch eine Druckmaschine oder zumindest ein Druckaggregat der Druckmaschine auf einen Bedruckstoff übertragen werden und/oder übertragbar sind. Das Druckfluid begründet vorzugsweise in fein strukturierter Form und/oder nicht lediglich großflächig eine bevorzugt sichtbare und/oder durch Sinneseindrücke spürbare und/oder maschinell detektierbare Textur auf dem Bedruckstoff. Insbesondere kann ein sich beispielsweise in einem Volumen des Druckkopfes, insbesondere des Inkjet-Druckkopfes, befindliches Druckfluid, insbesondere in Form von Tropfen, das Volumen des Druckkopfes durch eine Düse verlassen.

Das mindestens eine Druckaggregat umfasst zumindest einen Druckkopf, insbesondere zumindest einen Inkjet-Druckkopf. Vorzugsweise sind zumindest zwei Druckköpfe entlang der Querrichtung nebeneinander in einem Druckaggregat angeordnet. Der zumindest eine Druckkopf umfasst mindestens eine Austrittsfläche. Die Austrittsfläche eines Druckkopfes ist eine Fläche des Druckkopfes, welche dem Transportweg zugewandt ist, und umfasst mindestens eine Düse zum Ausstoßen von Druckfluidtropfen.

Der zumindest eine Druckkopf arbeitet zur Erzeugung von Druckfluidtropfen bevorzugt nach dem Drop-on-Demand-Verfahren, wobei Druckfluidtropfen bei Bedarf gezielt erzeugt werden. Bevorzugt umfasst der zumindest eine Druckkopf ein Piezoelement je Düse. Das Piezoelement kann ein mit Druckfluid gefülltes Volumen des Druckkopfes bei dem Anlegen einer elektrischen Spannung und/oder der Änderung einer angelegten elektrischen Spannung mit hoher Geschwindigkeit verändern, insbesondere verringern. Dadurch wird das Druckfluid zumindest teilweise aus dem Volumen verdrängt und zumindest teilweise durch eine mit dem Volumen verbundene Düse ausgestoßen. Bevorzugt weist das zumindest teilweise ausgestoßene Druckfluid ein Volumen von mindestens 40 pL (Pikoliter), insbesondere mindestens 45 pL auf. Das ausgestoßene Druckfluid bildet zumindest einen Druckfluidtropfen. Beispielsweise im Fall eines Betriebes der Druckmaschine wird der zumindest eine Druckfluidtropfen durch den Ausstoß aus mindestens einer Düse auf den Bedruckstoff übertragen und erzeugt vorzugsweise einen Druckpunkt auf der Oberfläche des Bedruckstoffes.

Das Anlegen unterschiedlicher Spannungen an das Piezoelement variiert beispielsweise die Größe des zumindest einen ausgestoßenen Druckfluidtropfens. Durch eine Variation der Größe des zumindest einen Druckfluidtropfens wird beispielsweise die Farbdichte in einem entstehenden Druckbild beeinflusst. Die Farbdichte beschreibt die optische Dichte von gedruckten Flächen und wird aus dem Remissionsgrad für undurchsichtige Materialien oder Transmissionsgrad für durchsichtige Materialien berechnet.

Alternativ zu der Verwendung eines Piezoelements ist jeder Düse zumindest eines Druckkopfes ein Heizelement zugeordnet. Das Heizelement verdampft zumindest teilweise das Druckfluid in einem mit Druckfluid gefüllten Volumen des Druckkopfes und erzeugt eine Gasblase. Das zusätzliche Volumen der Gasblase verdrängt das Druckfluid, welches wiederum durch die entsprechende Düse ausgestoßen wird und zumindest einen Druckfluidtropfen bildet. Variables Heizen ermöglicht variable Tropfengrößen.

Wie beispielsweise aus den Figuren ersichtlich, liegt mindestens ein zu druckendes Objekt 01 in einem ursprünglichen Dateiformat vor. Das zu druckende Objekt 01 zeigt beispielsweise zumindest einen Text, eine Grafik und/oder ein Bild und zeigt vorzugsweise zumindest eine Ausgangsvollfläche 07. Die zumindest eine Ausgangsvollfläche 07 ist ein Bereich, welcher zur Erzeugung eines Druckproduktes 06 auf dem Bedruckstoff nach Vorlage des zu druckenden Objektes 01 vollständig mit Farbe zu bedecken ist. Das bedeutet, die Ausgangsvollfläche 07 entspricht einem Bereich des Druckproduktes 06, in welchem der Bedruckstoff nach mindestens einem Druckvorgang vollständig mit Druckfluidtropfen bedeckt ist.

In einer Druckvorstufe, einem Raster Image Processor (RIP), und/oder einem Maschinenstrang der Druckmaschine wird das zu druckende Objekt 01 von dem ursprünglichen Dateiformat in ein von der Druckmaschine verarbeitbares Dateiformat, einer digitalen Bildvorlage 02, überführt und im Anschluss mit der Druckmaschine gedruckt.

Es wird in der digitalen Bildvorlage 02 jedem Druckbereich des mindestens einen zu druckenden Druckbildes jeweils ein erstes Raster 03 je eines Druckfluides zugeordnet. Die Summe der jeweiligen ersten Raster 03 je Druckfluid bilden zumindest ein Ausgangsraster 03. Somit wird jedem Druckbereich eines zu druckenden Druckbildes zumindest ein Ausgangsraster 03 zugeordnet. Vorzugsweise liegt nach der Zuordnung von zumindest einem Ausgangsraster 03 für das gesamte zu druckende Druckbild zumindest ein Farbauszug je Druckfluid vor. Bevorzugt liegt das Ausgangsraster 03 lediglich theoretisch vor. Weiter bevorzugt wird das Ausgangsraster 03 durch das mindestens eine Druckaggregat nicht auf den Bedruckstoff übertragen. Bevorzugt umfasst die digitale Bildvorlage 02 in jedem Druckbereich des mindestens einen zu druckenden Druckbildes jeweils ein erstes Raster 03, welches insbesondere jeweils einem Druckfluid einer Farbe zugeordnet ist. Bevorzugt entspricht das erste Raster 03 des jeweiligen Druckfluides einem Farbauszug für dieses jeweilige Druckfluid, insbesondere der jeweiligen Farbe.

Bevorzugt umfasst das zumindest eine Ausgangsraster 03 die jeweiligen ersten Raster 03 der jeweiligen Druckfluide. Üblicherweise weist das jeweilige erste Raster 03 dabei jeweils ein Druckfluid der Farbe Cyan oder Magenta oder Yellow oder Black auf. Bevorzugt weist das Ausgangsraster 03 zumindest eine Farbe, bevorzugt mindestens zwei Farben, weiter bevorzugt vier Farben, bevorzugt ausgewählt aus Cyan und/oder Magenta und/oder Yellow und/oder Black, auf.

Bevorzugt wird das Druckprodukt 06 entsprechend mindestens einem zweiten Raster 04 gedruckt und/oder dem Druckprodukt 06 mindestens ein zweites Raster 04 zugeordnet. Das zweite Raster 04 entspricht bevorzugt jeweils einem Farbauszug von einem Druckfluid, beispielsweise entsprechend dem jeweiligen ersten Raster 03, wobei das zweite Raster 04 vorzugsweise zumindest eine Farbaussparung 09, bevorzugt zumindest zwei Farbaussparungen 09, weiter bevorzugt eine Vielzahl von Farbaussparungen 09, innerhalb der Fläche dieses Farbauszuges aufweist. Üblicherweise weist das jeweilige zweite Raster 04 dabei jeweils ein Druckfluid der Farbe Cyan (C) oder Magenta (M) oder Yellow (Y) oder Black (K) auf.

Die Summe der jeweiligen zweiten Raster 04 je Druckfluid bilden zumindest ein Endraster 04, welches sich bevorzugt zumindest lediglich geringfügig von dem Ausgangsraster 03 unterscheidet. Das Endraster 04 entspricht der Summe aller zweiten Raster 04, insbesondere der Summe aller Farbauszüge der zu verwendenden Druckfluide, beispielsweise entsprechend dem jeweiligen ersten Raster 03, und zumindest einer Farbaussparung 09, bevorzugt zumindest zwei Farbaussparungen 09, weiter bevorzugt einer Vielzahl von Farbaussparungen 09, innerhalb der Fläche der Farbauszüge. Bevorzugt umfasst das Endraster 04 zumindest ein zweites Raster 04, bevorzugt mindestens drei zweite Raster 04, weiter bevorzugt mindestens vier zweite Raster 04, weiter bevorzugt genau vier zweite Raster 04. Üblicherweise weist das Endraster 04 dabei zumindest eine der Farben, bevorzugt mindestens drei der Farben, weiter bevorzugt zumindest die vier Farben, Cyan und/oder Magenta und/oder Yellow und/oder Black auf. Beispielsweise ist das Endraster 04 einfarbig ausgebildet, dabei weist es bevorzugt lediglich eine Farbe, beispielsweise Cyan oder Magenta oder Yellow oder bevorzugt Black, auf.

Beispielsweise wird die mindestens eine Ausgangsvollfläche 07 des zu druckenden Objektes 01 vor der Zuordnung des mindestens einen Farbauszuges mit dem mindestens einen zweiten Raster 04 beaufschlagt. Bevorzugt alternativ wird die mindestens eine Ausgangsvollfläche 07 des zu druckenden Objektes 01 beispielsweise nach der Zuordnung des mindestens einen Farbauszuges, insbesondere der Zuordnung des mindestens einen ersten Rasters 03, mit dem mindestens einen zweiten Raster 04 beaufschlagt.

Das zu druckende Druckprodukt 06 wird vorzugsweise in einem Betriebszustand der Druckmaschine durch das Ausstoßen von mindestens einem Druckfluidtropfen aus mindestens einem Druckkopf des mindestens einen Druckaggregates, insbesondere eines Non-Impact-Druckaggregates, und der Übertragung des mindestens einen Druckfluidtropfens auf den Bedruckstoff erzeugt. Das Endraster 04 wird durch mindestens ein Druckaggregat auf den Bedruckstoff übertragen. Vorzugsweise sind mindestens so viele Druckaggregate beteiligt, wie unterschiedliche Druckfluide, insbesondere unterschiedliche Farben, Verwendung finden, also wie viele zweite Raster 04 vorliegen. Bevorzugt wird jeweils ein Druckfluid, insbesondere eine Farbe, je Druckaggregat entsprechend dem jeweiligen zweiten Raster 04 dieses Druckfluides auf den Bedruckstoff übertragen. Bevorzugt weist das Druckaggregat jeweils ein Druckfluid der Farbe Cyan (C) oder Magenta (M) oder Yellow (Y) oder Black (K) auf.

Beispielsweise weisen zumindest zwei voneinander verschiedene Druckaggregate ein identisches Druckfluid auf. Dann wird beispielsweise das zweite Raster 04 dieses Druckfluides, durch lediglich eines dieser Druckaggregate auf den Bedruckstoff übertragen. Bevorzugt alternativ wird dann das zweite Raster 04 dieses Druckfluides, durch zumindest zwei Druckaggregate der zumindest zwei Druckaggregate mit diesem Druckfluid auf den Bedruckstoff übertragen, wobei beispielsweise ein erster Teil, beispielsweise eine erste Menge an Rasterpunkten, des entsprechenden zweiten Rasters 04 durch ein erstes Druckaggregat und ein zweiter Teil, beispielsweise eine zweite Menge an Rasterpunkten, des entsprechenden zweiten Rasters 04 durch ein zweites Druckaggregat auf den Bedruckstoff übertragen wird.

Ein Raster 03; 04, das mindestens eine erste Raster 03 und/oder das mindestens eine zweite Raster 04, entspricht der Umsetzung des zu druckenden Objektes 01 in einem ursprünglichen Dateiformat in eine Vielzahl von zu druckenden Druckpunkten des jeweiligen Druckfluides, den Rasterpunkten. Bevorzugt ist das Raster 03; 04 frequenzmoduliert, das bedeutet, ein stochastisches, nicht-periodisches Raster 03; 04, wobei beispielsweise pro Flächeneinheit die Anzahl und/oder die Größe vorliegender Rasterpunkte und/oder der Abstand vorliegender Rasterpunkte zueinander variiert werden. Durch unterschiedliche Anordnungen der Rasterpunkte zueinander wird beispielsweise der Tonwert und/oder die Farbdichte im jeweiligen Druckbereich des zu druckenden Druckbildes eingestellt. Der Tonwert ist im Vorangegangenen und im Folgenden ein Maß für den optischen Eindruck einer gerasterten Fläche, bevorzugt ausgedrückt in Prozent, wobei eine unbedruckte Fläche den Tonwert 0% und eine vollständig bedruckte Fläche, Volltonfläche genannt, den Tonwert 100% aufweist. Der Tonwert gibt bei Rastern das prozentuale Flächenverhältnis von Rasterpunkten zur Gesamtfläche an.

Das Ausgangsraster 03 zeigt zumindest eine Ausgangsvollfläche 07. Ein Druckbild, welches nach Vorlage des Ausgangsrasters 03 gedruckt worden ist, weist beispielsweise nach zumindest einem Druckprozess des Ausgangsrasters 03 im Bereich der mindestens einen Ausgangsvollfläche 07 eine Farbschichtdicke auf, welche ungleich null ist. Somit ist der Bedruckstoff nach mindestens einem Druckprozess des Ausgangsrasters 03 im Bereich der Ausgangsvollfläche 07 an jedem Punkt der Ausgangsvollfläche 07 mit mindestens einem Druckfluidtropfen bedeckt.

Die an einem Bezugspunkt auf dem Bedruckstoff aufgetragenen und beispielsweise zumindest teilweise überlappenden Schichten der mehr als einen Druckfluidtropfen, welche an dem Bezugspunkt durch den Druckprozess auf den Bedruckstoff übertragen worden sind, legen die Farbschichtdicke fest. Der Bezugspunkt beschreibt den Ort auf dem Bedruckstoff, an welchem die Farbschichtdicke gemessen wird.

Das Ausgangsraster 03 wird vor dem mindestens einen Druckprozess in das mindestens eine Endraster 04 überführt. Das Endraster 04 zeigt zumindest eine Endfläche 08, wobei sich die Endfläche 08 des Endrasters 04 von der Ausgangsvollfläche 07 lediglich in zumindest einem lokal begrenzten Bereich 09 unterscheidet, insbesondere zumindest einer lokal begrenzten Farbaussparung 09, wobei der zumindest eine lokal begrenzte Bereich 09 der Endfläche 08 im Vergleich zu dem entsprechenden Bereich der Ausgangsvollfläche 07 eine reduzierte Farbschichtdicke aufweist. Der zumindest eine lokal begrenzte Bereich 09 mit reduzierter Farbschichtdicke in der Endfläche 08 wird innerhalb dieser Beschreibung als Farbaussparung 09 bezeichnet. Die zumindest eine Endfläche 08 des Endrasters 04 unterscheidet sich von der Ausgangsvollfläche 07 lediglich darin, dass die Endfläche 08 den zumindest einen lokal begrenzten Bereich 09 aufweist, welcher jeweils als Farbaussparung 09 ausgebildet ist. Die zumindest eine Farbaussparung 09 der zumindest einen Endfläche 08 weist im Vergleich zu dem entsprechenden Bereich der Ausgangsvollfläche 07 eine reduzierte Farbschichtdicke auf.

In dem mindestens einen Druckbild des Druckproduktes 06 ist die zumindest eine Farbaussparung 09 als mindestens ein lokal begrenzter Bereich 09 mit reduzierter Farbschichtdicke im Vergleich zu der maximalen Farbschichtdicke des jeweiligen Bereichs der Ausgangsvollfläche 07 des Ausgangsrasters 03 ausgebildet. Vorzugsweise ist die zumindest eine Farbaussparung 09 als ein lokal begrenzter Bereich 09 mit keinem Farbauftrag ausgebildet. Dies heißt, dass die zumindest eine Farbaussparung 09 eine reduzierte Farbschichtdicke im Vergleich zu der maximalen Farbschichtdicke des entsprechenden Bereichs der jeweiligen Ausgangsvollfläche 07 aufweist.

In einem Betriebszustand der Druckmaschine wird entsprechend einer zu dem Endraster 04 veränderten digitalen Bildvorlage 02 zumindest ein Druckfluid auf mindestens einen Bedruckstoff übertragen. Das Druckbild des mindestens einen Bedruckstoffes entspricht vorzugsweise der durch das Endraster 04 veränderten digitalen Bildvorlage 02. Das Druckbild zeigt vorzugsweise das zu druckende Objekt 01 mit zumindest einer Endfläche 08, wobei die Endfläche 08 zumindest eine Farbaussparung 09 entsprechend dem Endraster 04 aufweist. Vorzugsweise wird das zu druckende Druckprodukt 06 erzeugt, welches vorzugsweise das Druckbild des zu druckenden Objektes 01, insbesondere mit dem Endraster 04, umfasst.

Vorzugsweise wird die Anzahl und/oder die Größe und/oder die Form der Farbaussparungen 09 und/oder der Abstand zweier Farbaussparungen 09 zueinander innerhalb einer Endfläche 08 variiert. Mindestens zwei Farbaussparungen 09 zeigen bevorzugt eine stochastische Verteilung innerhalb der mindestens einen betreffenden Endfläche 08. Die vorzugsweise stochastische Verteilung zumindest zweier Farbaussparungen 09 innerhalb der Endfläche 08 minimiert bevorzugt die Bildung optischer Störeffekte, wie beispielsweise einem Moirè-Effekt und/oder einer Rosettenbildung.

Bevorzugt weist die mindestens eine Farbaussparung 09 innerhalb einer Endfläche 08 eine Flächendeckung von mindestens 1,0 pro mm² (Anzahl pro Quadratmillimeter), insbesondere mindestens 1,0 pro mm², und maximal 15,0 pro mm², insbesondere maximal 10,0 pro mm² auf. Die Flächendeckung beschreibt die Anzahl der vorhandenen Farbaussparungen 09 pro Flächenanteil. Vorzugsweise beträgt der Durchmesser einer runden Farbaussparung 09 jeweils mindestens 0,05 mm (Millimeter), insbesondere mindestens 0,08 mm, und maximal 0,5 mm, insbesondere maximal 0,2 mm. Bei beispielsweise elliptischen oder rechteckigen Farbaussparungen 09 beträgt die längere Achse bevorzugt mindestens 0,05 mm, insbesondere mindestens 0,08 mm, und maximal 0,2 mm, insbesondere maximal 0,15 mm. Der Flächeninhalt einer Farbaussparung 09 beträgt jeweils mindestens 0,008 mm² (Quadratmillimeter) und maximal 0,8 mm², insbesondere maximal 0,2 mm².

In einem Ausführungsbeispiel wird beispielsweise während eines Betriebszustandes der Druckmaschine mindestens ein Druckbild nach einer durch ein Endraster 04 veränderten digitalen Bildvorlage 02 auf mindestens einen Bedruckstoff gedruckt. Die Vielzahl der Druckpunkte von mindestens einem Druckfluid erzeugt vorzugsweise das mindestens eine Druckbild. Das Druckbild umfasst vorzugsweise zumindest eine Endfläche 08 mit mindestens einer Farbaussparung 09. Durch die mindestens eine Farbaussparung 09 wird beispielsweise die Trocknung des mindestens einen Druckfluides auf dem Bedruckstoff unterstützt.

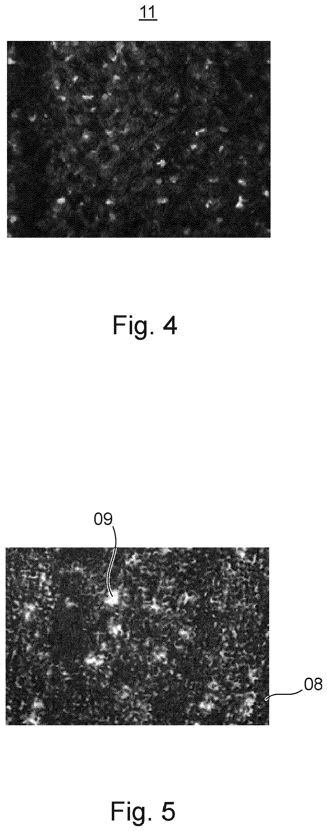

Bevorzugt wird mindestens ein Tiefdruck-Druckbild 11 simuliert und/oder nachgebildet, welches durch mindestens ein Tiefdruckverfahren erzeugt wird und/oder zu erzeugen ist. Fig. 4 zeigt ein beispielhaftes Tiefdruck-Druckbild 11, hergestellt in einem Tiefdruckverfahren. Fig. 5 zeigt ein beispielhaftes Druckbild eines Druckproduktes 06, hergestellt in einem Non-Impact-Druckverfahren, welches eine Endfläche 08 mit Farbaussparungen 09 aufweist und beispielhaft das Tiefdruck-Druckbild 11 aus Fig. 4 nachbildet. Das Druckbild des mindestens einen Druckproduktes 06 weist vorzugsweise mindestens eine Farbaussparung 09, insbesondere mindestens zwei stochastisch verteilte Farbaussparungen 09, auf. Die mindestens eine Farbaussparung 09 entspricht bevorzugt jenem Bereich eines in mindestens einem Tiefdruckverfahren gedruckten Tiefdruck-Druckbildes 11, an welchem das mindestens eine Druckfluid zumindest teilweise an mindestens einem Steg mindestens einer Druckform anhaftet und/oder lediglich in geringerem Volumen oder nicht auf den Bedruckstoff übertragen wird. Ein Tiefdruck-Druckbild 11, welches durch mindestens ein Tiefdruckverfahren zu erzeugen ist, wird bevorzugt durch mindestens ein Druckbild, welches mindestens eine Endfläche 08 mit mindestens einer Farbaussparung 09 aufweist, in mindestens einem Druckvorgang mindestens eines Non-Impact-Druckaggregates erzeugt.

Der mindestens eine in einem Betriebszustand der Druckmaschine bedruckte Bedruckstoff ist als ein Druckprodukt 06 ausgebildet. Das Druckprodukt 06 weist mindestens ein Druckbild auf, welches vorzugsweise der durch das mindestens eine Endraster 04 veränderten digitalen Bildvorlage 02 entspricht.

Das Druckbild des Druckproduktes 06 weist mindestens eine Endfläche 08 auf, wobei die mindestens eine Endfläche 08 mindestens eine Farbaussparung 09 aufweist, wobei die mindestens eine Farbaussparung 09 im Vergleich zu der maximalen Farbschichtdicke des entsprechenden Bereichs der jeweiligen Ausgangsvollfläche 07 eine reduzierte Farbschichtdicke aufweist.

Das mindestens eine Druckprodukt 06 ist vorzugsweise als Dekor 06 ausgebildet. Bevorzugt ist das mindestens eine Dekor 06 als mindestens eine Holzoptik und/oder mindestens eine Holzmaserung ausgebildet.

Das Druckprodukt 06 weist eine Vielzahl von getrockneten Druckfluidtropfen auf, wobei die Druckfluidtropfen mindestens eines Non-Impact-Druckaggregates, insbesondere mindestens eines Inkjet-Druckaggregates, auf dem Bedruckstoff überlagert angeordnet sind und den Bedruckstoff zumindest teilweise flächig bedecken. Das Druckprodukt 06 weist mindestens eine Farbaussparung 09 auf, wobei das Druckprodukt 06 innerhalb der mindestens einen Farbaussparung 09 keine Druckfluidtropfen auf dem Bedruckstoff aufweist. Vorzugsweise sind mindestens zwei Farbaussparungen 09 innerhalb des Druckproduktes 06 vorgesehen, wobei die mindestens zwei Farbaussparungen 09 vorzugsweise jeweils eine stochastische Verteilung aufweisen.

Das Druckprodukt 06 weist die mindestens eine Endfläche 08 auf, wobei die jeweilige Endfläche 08 die mindestens eine Farbaussparung 09, mindestens zwei Farbaussparungen 09, bevorzugt eine Vielzahl von Farbaussparungen 09, aufweist. Die mindestens eine Endfläche 08 des Druckproduktes 06 ist an jedem Punkt mit Ausnahme der mindestens einen Farbaussparung 09 mit mindestens einem Druckfluidtropfen bedeckt. Innerhalb der zumindest einen Endfläche 08 ist die mindestens eine Farbaussparung 09 jeweils von sich zumindest teilweise überlappenden Druckfluidtropfen und/oder von den Bedruckstoff flächig bedeckenden Druckfluidtropfen umgeben und/oder begrenzt.

In einer Ausführung weist die mindestens eine Endfläche 08 eine Länge von mindestens 100 mm (Millimeter) und eine Breite von mindestens 100 mm auf.

Vorzugsweise weist das mindestens eine Druckbild des mindestens einen Druckproduktes 06 eine Länge von mindestens 1.000 mm (Millimeter), insbesondere mindestens 1.200 mm, weiter bevorzugt mindestens 2.000 mm auf. Bevorzugt weist das mindestens eine Druckbild des mindestens einen Druckproduktes 06 innerhalb einer Länge von mindestens 1.000 mm, insbesondere innerhalb einer Länge von mindestens 1.200 mm, weiter bevorzugt innerhalb einer Länge von mindestens 2.000 mm, ein sich nicht wiederholendes und/oder nicht wiederkehrendes und/oder einmaliges Bildmuster auf.

Vorzugsweise beträgt der Durchmesser eines runden getrockneten Druckfluidtropfens jeweils mindestens 0,01 mm (Millimeter), insbesondere mindestens 0,02 mm, und maximal 0,08 mm, insbesondere maximal 0,05 mm, bevorzugt maximal 0,03 mm. Bei beispielsweise elliptischen getrockneten Druckfluidtropfen beträgt die längere Achse bevorzugt mindestens 0,01 mm, insbesondere mindestens 0,02 mm, und maximal 0,08 mm, insbesondere maximal 0,05 mm. Jeweils ein getrockneter Druckfluidtropfen weist einen Flächeninhalt von mindestens 0,00008 mm² (Quadratmillimeter), insbesondere von mindestens 0,0003 mm² und von maximal 0,005 mm², insbesondere von maximal 0,001 mm², bevorzugt von maximal 0,0007 mm², auf.

Bevorzugt wird das mindestens eine Druckprodukt 06 beispielsweise ohne ein weiteres zwischengeschaltenes Druckaggregat nach dem Bedrucken mit mindestens einem Druckfluid beispielsweise mit mindestens einem Harz und/oder mindestens einem Lack und/oder mindestens einer Folie beschichtet und/oder getränkt. Das mindestens eine Druckprodukt 06 und/oder das mindestens eine beschichte Druckprodukt 06 wird vorzugsweise auf mindestens ein Trägermaterial aufgebracht und/oder geklebt und/oder mit mindestens einem Trägermaterial stoffschlüssig verbunden und bildet mit dem mindestens einen Trägermaterial mindestens ein Laminat. Das Druckprodukt 06 ist vorzugsweise als Bestandteil eines Laminates ausgebildet. Das Trägermaterial ist vorzugsweise als mindestens eine Platte, ein Blech und/oder eine Paneele ausgebildet und enthält beispielsweise Holz, Kunststoff und/oder Metall. Ein Laminat bezeichnet ein Produkt, welches aus mindestens zwei flächig miteinander verbundenen Schichten, insbesondere geklebten und/oder stoffschlüssig verbundenen Schichten, besteht.

Das mindestens eine Laminat weist bevorzugt eine Länge von mindestens 1.200 mm, insbesondere mindestens 1.300 mm, weiter bevorzugt von mindestens 1.900 mm auf. Vorzugsweise weist das mindestens eine Laminat eine maximale Länge von 2.500 mm auf. Das mindestens eine Laminat weist vorzugsweise eine Breite von mindestens 180 mm, insbesondere mindestens 200 mm, weiter bevorzugt mindestens 250 mm, auf. Bevorzugt weist das mindestens eine Laminat über seine gesamte Länge von mindestens 1.200 mm mindestens ein sich nicht wiederholendes und/oder nicht wiederkehrendes und/oder einmaliges Bildmuster auf, insbesondere mindestens ein Dekor 06 mit Holzoptik und/oder Holzmaserung.

### Bezugszeichenliste

- 01: Zu druckendes Objekt
- 02: Digitale Bildvorlage
- 03: Raster, erstes; Ausgangsraster
- 04: Raster, zweites; Endraster
- 05: -
- 06: Druckprodukt; Dekor
- 07: Ausgangsvollfläche
- 08: Endfläche
- 09: Lokal begrenzter Bereich; Farbaussparung
- 10: -
- 11: Tiefdruck-Druckbild

## Patentansprüche

1. Verfahren zum Erzeugen eines Druckproduktes (06) mit mindestens einem Non-Impact-Druckaggregat einer Druckmaschine,
wobei in einer Druckvorstufe, einem Raster Image Processor (RIP), und/oder einem Maschinenstrang der Druckmaschine das zu druckende Objekt (01) von dem ursprünglichen Dateiformat in ein von der Druckmaschine verarbeitbares Dateiformat, der digitale Bildvorlage (02), überführt und das zu druckende Objekt (01) im Anschluss mit der Druckmaschine gedruckt wird, umfassend mehrere Schritte:
- wobei in einem Schritt in der digitalen Bildvorlage (02) jedem Druckbereich eines zu druckenden Druckbildes zumindest ein Ausgangsraster (03) zugeordnet wird, wobei dabei jedem Druckbereich des zu druckenden Druckbildes jeweils ein erstes Raster (03) je eines Druckfluides zugeordnet wird, wobei die Summe der jeweiligen ersten Raster (03) je Druckfluid das zumindest eine Ausgangsraster (03) bilden, wobei das erste Raster (03) der Umsetzung des zu druckenden Objektes (01) in einem ursprünglichen Dateiformat in eine Vielzahl von zu druckenden Druckpunkten des jeweiligen Druckfluides, den Rasterpunkten, entspricht,
wobei das Ausgangsraster (03) eine Ausgangsvollfläche (07) zeigt,
wobei die Ausgangsvollfläche (07) ein Bereich ist, welcher zur Erzeugung eines Druckproduktes (06) auf einem Bedruckstoff nach Vorlage des zu druckenden Objektes (01) vollständig mit Farbe zu bedecken ist,
- wobei in einem weiteren Schritt das Ausgangsraster (03) vor dem mindestens einen Druckprozess in ein Endraster (04) überführt wird,
wobei das Endraster (04) aus der Summe von jeweiligen zweiten Rastern (04) je Druckfluid gebildet wird,
wobei ein zweites Raster (04) der Umsetzung des zu druckenden Objektes (01) in einem ursprünglichen Dateiformat in eine Vielzahl von zu druckenden Druckpunkten des jeweiligen Druckfluides, den Rasterpunkten, entspricht,
wobei das Endraster (04) zumindest eine Endfläche (08) zeigt,
wobei sich die Endfläche (08) des Endrasters (04) von der Ausgangsvollfläche (07) lediglich darin unterscheidet, dass die Endfläche (08) zumindest zwei lokal begrenzte Bereiche (09) aufweist, welcher jeweils als Farbaussparung (09) ausgebildet ist,
- wobei in einem weiteren Schritt das Endraster (04) durch das mindestens eine Druckaggregat auf einen Bedruckstoff übertragen wird,
wobei das Druckprodukt (06) die mindestens eine Endfläche (08) mit mindestens zwei Farbaussparungen (09) aufweist,
wobei in dem mindestens einen Druckbild des Druckproduktes (06) die zumindest eine Farbaussparung (09) der mindestens zwei Farbaussparungen (09) als mindestens ein lokal begrenzter Bereich (09) mit reduzierter Farbschichtdicke des jeweiligen Bereichs der Ausgangsvollfläche (07) des Ausgangsrasters (03) ausgebildet ist,
wobei das Druckprodukt (06) innerhalb der mindestens einen Farbaussparung (09) der mindestens zwei Farbaussparungen (09) keine Druckfluidtropfen auf dem Bedruckstoff aufweist,
**dadurch gekennzeichnet,**
**dass** jeweils ein getrockneter Druckfluidtropfen einen Flächeninhalt von mindestens 0,00008 mm² (Quadratmillimeter) und von maximal 0,005 mm² aufweist,
**dass** der Flächeninhalt der einen Farbaussparung (09) der mindestens zwei Farbaussparungen (09) jeweils mindestens 0,008 mm² (Quadratmillimeter) und maximal 0,8 mm² beträgt.

2. Verfahren nach Anspruch 1, **dadurch gekennzeichnet, dass** die zumindest eine Farbaussparung (09) in dem mindestens einen Druckbild des Druckproduktes (06) als mindestens ein Bereich mit keinem Farbauftrag ausgebildet ist.

3. Verfahren nach Anspruch 1 oder 2, **dadurch gekennzeichnet, dass** die Anzahl und/oder die Größe und/oder die Form der Farbaussparungen (09) und/oder der Abstand zweier Farbaussparungen (09) zueinander innerhalb einer Endfläche (08) variiert werden.

4. Verfahren nach Anspruch 1 oder 2 oder 3, **dadurch gekennzeichnet, dass** die mindestens zwei Farbaussparungen (09) eine stochastische Verteilung innerhalb der betreffenden Endfläche (08) zeigen.

5. Verfahren nach Anspruch 1 oder 2 oder 3 oder 4, **dadurch gekennzeichnet, dass** die Summe der zumindest zwei Farbaussparungen (09) innerhalb der betreffenden Endfläche (08) eine Flächendeckung von mindestens 1,0 pro mm² (Anzahl pro Quadratmillimeter) und maximal 15,0 pro mm² zeigen.

6. Verfahren nach Anspruch 1 oder 2 oder 3 oder 4 oder 5, **dadurch gekennzeichnet, dass** mindestens ein Tiefdruck-Druckbild (11) simuliert oder nachgebildet wird, welches durch mindestens ein Tiefdruckverfahren erzeugt wird oder zu erzeugen ist, dass das Druckbild eines in einem Tiefdruckverfahren hergestellten Objektes stochastisch verteilte Bereiche reduzierter Farbschichtdicke aufweist, dass diese Bereiche reduzierter Farbschichtdicke durch das Integrieren von Farbaussparungen (09) in einer Endfläche (08) im Digitaldruck nachempfunden werden.

7. Druckprodukt (06),
wobei das Druckprodukt (06) eine Vielzahl von getrockneten Druckfluidtropfen mindestens eines Non-Impact-Druckaggregates aufweist, welche Druckfluidtropfen auf einem Bedruckstoff überlagert angeordnet sind und den Bedruckstoff zumindest teilweise flächig bedecken,
wobei das Druckprodukt (06) mindestens eine Endfläche (08) mit jeweils mindestens zwei Farbaussparungen (09) aufweist,
wobei die mindestens eine Endfläche (08) des Druckproduktes (06) an jedem Punkt mit Ausnahme der mindestens zwei Farbaussparungen (09) mit mindestens einem Druckfluidtropfen bedeckt ist, wobei das Druckprodukt (06) innerhalb der mindestens einen Farbaussparung (09) der mindestens zwei Farbaussparungen (09) keine Druckfluidtropfen auf dem Bedruckstoff aufweist,
wobei die mindestens eine Farbaussparung (09) der mindestens zwei Farbaussparungen (09) innerhalb der mindestens einen Endfläche (08) jeweils von sich zumindest teilweise überlappenden Druckfluidtropfen oder von einen Bedruckstoff flächig bedeckenden Druckfluidtropfen umgeben oder begrenzt ist, **dadurch gekennzeichnet, dass** das Druckprodukt (06) als Dekor (06) ausgebildet ist, dass die mindestens eine Endfläche (08) eine Länge von mindestens 100 mm (Millimeter) und eine Breite von mindestens 100 mm aufweist,
dass jeweils ein getrockneter Druckfluidtropfen einen Flächeninhalt von mindestens 0,00008 mm² (Quadratmillimeter) und von maximal 0,005 mm² aufweist,
dass der Flächeninhalt einer Farbaussparung (09) jeweils mindestens 0,008 mm² (Quadratmillimeter) und maximal 0,8 mm² beträgt,
dass die mindestens eine Farbaussparung (09) der mindestens zwei Farbaussparungen (09) eine Flächendeckung von mindestens 1,0 pro mm² (Anzahl pro Quadratmillimeter) und maximal 15,0 pro mm² aufweist.

8. Druckprodukt nach Anspruch 7, **dadurch gekennzeichnet, dass** die mindestens zwei Farbaussparungen (09) innerhalb des Druckproduktes (06) vorgesehen sind, wobei die mindestens zwei Farbaussparungen (09) jeweils eine stochastische Verteilung aufweisen.

9. Druckprodukt nach Anspruch 7 oder 8, **dadurch gekennzeichnet, dass** das mindestens eine Druckbild des mindestens einen Druckproduktes (06) eine Länge von mindestens 1.000 mm (Millimeter) aufweist und innerhalb einer Länge von mindestens 1.000 mm ein sich nicht wiederholendes oder nicht wiederkehrendes oder einmaliges Bildmuster aufweist.

10. Druckprodukt nach Anspruch 7 oder 8 oder 9, **dadurch gekennzeichnet, dass** das Dekor (06) mindestens eine Holzoptik und/oder mindestens eine Holzmaserung aufweist.

11. Druckprodukt nach Anspruch 7 oder 8 oder 9 oder 10, **dadurch gekennzeichnet, dass** das Druckprodukt (06) als Bestandteil eines Laminates ausgebildet ist.

## Claims

1. Method for producing a printed product (06) using at least one non-impact printing unit of a printing press,
wherein, in a pre-press, a Raster Image Processor (RIP) and/or a line of the printing press, the object (01) to be printed is converted from the original file format into a file format that can be processed by the printing press, the digital image template (02), and the object (01) to be printed is then printed using the printing press, said method comprising a number of steps:
- wherein, in one step, in the digital image template (02), at least one initial raster (03) is assigned to each print area of a print image to be printed,
wherein in each case a first raster (03) for each printing fluid is assigned to each print area of the print image to be printed, the sum of the respective first rasters (03) for each printing fluid forming the at least one initial raster (03),
wherein the first raster (03) corresponds to the conversion of the object (01) to be printed, which is in an original file format, into a plurality of print dots of the respective printing fluid that are to be printed, the raster dots,
wherein the initial raster (03) shows an initial full surface (07),
wherein the initial full surface (07) is an area that is to be fully covered with ink in order to produce a printed product (06) on a print substrate in accordance with the template of the object (01) to be printed,
- wherein, in a further step, the initial raster (03) is converted into a final raster (04) prior to the at least one printing process,
wherein the final raster (04) is formed of the sum of respective second rasters (04) for each printing fluid,
wherein a second raster (04) corresponds to the conversion of the object (01) to be printed, which is in an original file format, into a plurality of print dots of the respective printing fluid that are to be printed, the raster dots,
wherein the final raster (04) shows at least one final surface (08),
wherein the final surface (08) of the final raster (04) differs from the initial full surface (07) only in that the final surface (08) has at least two locally delimited areas (09), each designed as an ink gap (09),
- wherein, in a further step, the final raster (04) is transferred to a print substrate by the at least one printing unit,
wherein the printed product (06) has the at least one final surface (08) with at least two ink gaps (09),
wherein, in the at least one print image of the printed product (06), the at least one ink gap (09) of the at least two ink gaps (09) is designed as at least one locally delimited area (09) with a reduced ink layer thickness of the respective area of the initial full surface (07) of the initial raster (03),
wherein the printed product (06) has no printing fluid droplets on the print substrate within the at least one ink gap (09) of the at least two ink gaps (09),
**characterized**
**in that** in each case a dried printing fluid droplet has a surface area of at least 0.00008 mm² (square millimeters) and of at most 0.005 mm²,
**in that** the surface area of the one ink gap (09) of the at least two ink gaps (09) is in each case at least 0.008 mm² (square millimeters) and at most 0.8 mm².

2. Method according to claim 1, **characterized in that** the at least one ink gap (09) in the at least one print image of the printed product (06) is designed as at least one area with no ink application.

3. Method according to claim 1 or 2, **characterized in that** the number and/or the size and/or the shape of the ink gaps (09) and/or the distance between two ink gaps (09) are varied within a final surface (08).

4. Method according to claim 1 or 2 or 3, **characterized in that** the at least two ink gaps (09) exhibit a stochastic distribution within the relevant final surface (08).

5. Method according to claim 1 or 2 or 3 or 4, **characterized in that** the sum of the at least two ink gaps (09) within the relevant final surface (08) exhibits a surface coverage of at least 1.0 per mm² (number per square millimeter) and at most 15.0 per mm².

6. Method according to claim 1 or 2 or 3 or 4 or 5, **characterized in that** at least one intaglio-printed print image (11) is simulated or reproduced, which is produced or is to be produced by at least one intaglio printing process, **in that** the print image of an object produced in an intaglio printing process has stochastically distributed areas of reduced ink layer thickness, and **in that** these areas of reduced ink layer thickness are replicated in the digital print by incorporating ink gaps (09) in a final surface (08).

7. Printed product (06),
wherein the printed product (06) comprises a large number of dried printing fluid droplets from at least one non-impact printing unit, which printing fluid droplets are arranged superimposed on a print substrate and cover at least some areas of the print substrate,
wherein the printed product (06) has at least one final surface (08) with in each case at least two ink gaps (09),
wherein the at least one final surface (08) of the printed product (06) is covered with at least one printing fluid droplet at every point with the exception of the at least two ink gaps (09), the printed product (06) having no printing fluid droplets on the print substrate within the at least one ink gap (09) of the at least two ink gaps (09),
wherein the at least one ink gap (09) of the at least two ink gaps (09) within the at least one final surface (08) is surrounded or delimited in each case by at least partially overlapping printing fluid droplets or by printing fluid droplets covering the surface of a print substrate,
**characterized in that** the printed product (06) is designed as a decoration (06),
**in that** the at least one final surface (08) has a length of at least 100 mm (millimeters) and a width of at least 100 mm,
**in that** in each case a dried printing fluid droplet has a surface area of at least 0.00008 mm² (square millimeters) and of at most 0.005 mm²,
**in that** the surface area of an ink gap (09) is in each case at least 0.008 mm² (square millimeters) and at most 0.8 mm²,
**in that** the at least one ink gap (09) of the at least two ink gaps (09) has a surface coverage of at least 1.0 per mm² (number per square millimeter) and at most 15.0 per mm².

8. Printed product according to claim 7, **characterized in that** the at least two ink gaps (09) are provided within the printed product (06), the at least two ink gaps (09) having a stochastic distribution in each case.

9. Printed product according to claim 7 or 8, **characterized in that** the at least one print image of the at least one printed product (06) has a length of at least 1000 mm (millimeters) and has a non-repeating or non-recurring or singular image pattern over a length of at least 1000 mm.

10. Printed product according to claim 7 or 8 or 9, **characterized in that** the decoration (06) has at least one wood effect and/or at least one wood grain.

11. Printed product according to claim 7 or 8 or 9 or 10, **characterized in that** the printed product (06) is designed as part of a laminate.

## Revendications

1. Procédé de fabrication d'un produit d'impression (06) avec au moins un groupe d'impression sans impact d'une machine d'impression,
dans lequel, dans une pré-impression, un processeur d'image trame (RIP) et/ou une ligne de la machine d'impression, l'objet (01) à imprimer est transféré du format de fichier initial dans un format de fichier pouvant être traité par la machine d'impression, du modèle d'image (02) numérique, et l'objet (01) à imprimer est ensuite imprimé avec la machine d'impression, comprenant plusieurs étapes :
- dans lequel dans une étape dans le modèle d'image (02) numérique au moins une trame de sortie (03) est attribuée à chaque zone d'impression d'une image d'impression à imprimer, dans lequel ce faisant une première trame (03) d'un fluide d'impression respectif est respectivement attribuée à chaque zone d'impression de l'image d'impression à imprimer, dans lequel la somme des premières trames (03) respectives par fluide d'impression forment la au moins une trame de sortie (03), dans lequel la première trame (03) de la conversion de l'objet (01) à imprimer dans un format de fichier initial en une pluralité de points d'impression à imprimer du fluide d'impression respectif correspond aux points de trame,
dans lequel la trame de sortie (03) montre une surface intégrale de sortie (07),
dans lequel la surface intégrale de sortie (07) est une zone qui, pour la fabrication d'un produit d'impression (06) sur un support d'impression, doit être intégralement recouverte d'encre après présentation de l'objet (01) à imprimer,
- dans lequel dans une autre étape la trame de sortie (03) est transférée jusque dans une trame d'extrémité (04) avant le au moins un processus d'impression,
dans lequel la trame d'extrémité (04) est formée à partir de la somme de secondes trames (04) respectives par fluide d'impression,
dans lequel une seconde trame (04) de la conversion de l'objet (01) à imprimer dans un format de fichier initial en une pluralité de points d'impression à imprimer du fluide d'impression respectif correspond aux points de trame,
dans lequel la trame d'extrémité (04) montre au moins une surface d'extrémité (08),
dans lequel la surface d'extrémité (08) de la trame d'extrémité (04) se différencie de la surface intégrale de sortie (07) uniquement en ce que la surface d'extrémité (08) présente au moins deux zones (09) délimitées localement, laquelle est respectivement conçue en tant que cavité d'encre (09),
- dans lequel dans une autre étape la trame d'extrémité (04) est transmise jusque sur un support d'impression par le au moins un groupe d'impression,
dans lequel le produit d'impression (06) présente la au moins une surface d'extrémité (08) avec au moins deux cavités d'encre (09),
dans lequel, dans la au moins une image d'impression du produit d'impression (06), la au moins une cavité d'encre (09) des au moins deux cavités d'encre (09) est conçue en tant qu'au moins une zone (09) délimitée localement avec une épaisseur de couche d'encre réduite de la zone respective de la surface intégrale de sortie (07) de la trame de sortie (03),
dans lequel le produit d'impression (06) ne présente aucune goutte de fluide d'impression sur le support d'impression à l'intérieur de la au moins une cavité d'encre (09) des au moins deux cavités d'encre (09),
**caractérisé en ce que**
respectivement au moins une goutte de fluide d'impression séchée présente une superficie d'au moins 0,00008 mm² (millimètre carré) et au maximum de 0,005 mm²,
**en ce que** la superficie de la une cavité d'encre (09) des au moins deux cavités d'encre (09) s'élève respectivement à au moins 0,008 mm² (millimètre carré) et au maximum à 0,8 mm².

2. Procédé selon la revendication 1, **caractérisé en ce que** la au moins une cavité d'encre (09) dans la au moins une image d'impression du produit d'impression (06) est conçue en tant qu'au moins une zone sans aucune application d'encre.

3. Procédé selon la revendication 1 ou 2, **caractérisé en ce que** le nombre et/ou la taille et/ou la forme des cavités d'encre (09) et/ou la distance entre deux cavités d'encre (09) sont modifiées à l'intérieur d'une surface d'extrémité (08).

4. Procédé selon la revendication 1 ou 2 ou 3, **caractérisé en ce que** les au moins deux cavités d'encre (09) montrent une distribution stochastique à l'intérieur de la surface d'extrémité (08) concernée.

5. Procédé selon la revendication 1 ou 2 ou 3 ou 4, **caractérisé en ce que** la somme des au moins deux cavités d'encre (09) à l'intérieur de la surface d'extrémité (08) concernée montre une couverture de surface d'au moins 1,0 par mm² (nombre par millimètre carré) et au maximum de 15,0 par mm².

6. Procédé selon la revendication 1 ou 2 ou 3 ou 4 ou 5, **caractérisé en ce qu'**au moins une image d'impression d'héliogravure (11) est simulée ou reproduite, laquelle est fabriquée ou est à fabriquer par au moins un procédé d'héliogravure, **en ce que** l'image d'impression d'un objet fabriqué dans un procédé d'héliogravure présente des zones distribuées de façon stochastique d'épaisseurs de couche d'encre réduites, **en ce que** ces zones d'épaisseurs de couche d'encre réduites sont imitées dans l'impression numérique par l'intégration de cavités d'encre (09) dans une surface d'extrémité (08).

7. Produit d'impression (06),
dans lequel le produit d'impression (06) présente une pluralité de gouttes de fluide d'impression séchées d'au moins un groupe d'impression sans impact, lesquelles gouttes de fluide d'impression sont agencées de façon superposée sur un support d'impression et recouvrent le support d'impression au moins partiellement sur la surface,
dans lequel le produit d'impression (06) présente au moins une surface d'extrémité (08) avec respectivement au moins deux cavités d'encre (09),
dans lequel la au moins une surface d'extrémité (08) du produit d'impression (06) est recouverte en chaque point, à l'exception des au moins deux cavités d'encre (09), avec au moins une goutte de fluide d'impression, dans lequel le produit d'impression (06) ne présente aucune goutte de fluide d'impression sur le support d'impression à l'intérieur de la au moins une cavité d'encre (09) des au moins deux cavités d'encre (09),
dans lequel la au moins une cavité d'encre (09) des au moins deux cavités d'encre (09) à l'intérieur de la au moins une surface d'extrémité (08) est respectivement entourée ou délimitée par des gouttes de fluide d'impression se chevauchant au moins partiellement ou par des gouttes de fluide d'impression recouvrant le support d'impression sur la surface,
**caractérisé en ce que** le produit d'impression (06) est conçu en tant que décor (06),
**en ce que** la au moins une surface d'extrémité (08) présente une longueur d'au moins 100 mm (millimètre) et une largeur d'au moins 100 mm,
**en ce que** respectivement une goutte de fluide d'impression séchée présente une superficie d'au moins 0,00008 mm² (millimètre carré) et au maximum de 0,005 mm²,
**en ce que** la superficie d'une cavité d'encre (09) s'élève respectivement à au moins 0,008 mm² (millimètre carré) et au maximum à 0,8 mm²,
**en ce que** la au moins une cavité d'encre (09) des au moins deux cavités d'encre (09) présente une couverture de surface d'au moins 1,0 par mm² (nombre par millimètre carré) et au maximum de 15,0 par mm².

8. Produit d'impression selon la revendication 7, **caractérisé en ce que** les au moins deux cavités d'encre (09) sont prévues à l'intérieur du produit d'impression (06), dans lequel les au moins deux cavités d'encre (09) présentent respectivement une distribution stochastique.

9. Produit d'impression selon la revendication 7 ou 8, **caractérisé en ce que** la au moins une image d'impression du au moins un produit d'impression (06) présente une longueur d'au moins 1,000 mm (millimètre) et à l'intérieur d'une longueur d'au moins 1,000 mm présente un motif d'image non répétitif ou non récurrent ou unique.

10. Produit d'impression selon la revendication 7 ou 8 ou 9, **caractérisé en ce que** le décor (06) présente au moins un effet bois et/ou au moins une veinure du bois.

11. Produit d'impression selon la revendication 7 ou 8 ou 9 ou 10, **caractérisé en ce que** le produit d'impression (06) est conçu comme faisant partie d'un laminé.
